# EUROPÄISCHE PATENTSCHRIFT

(11) **EP 2 713 833 B1**
(45) Veröffentlichungstag und Bekanntmachung des Hinweises auf die Patenterteilung: **03.12.2014**
(21) Anmeldenummer: 12724976.1
(22) Anmeldetag: 29.05.2012
(51) Int. Cl.: A47J 17/02

(54) **SCHÄLVORRICHTUNG FÜR LEBENSMITTEL**
PEELING DEVICE FOR FOOD
DISPOSITIF D'ÉPLUCHAGE POUR ALIMENTS

(30) Priorität: 30.05.2011 DE 102011050703
(43) Veröffentlichungstag der Anmeldung: 09.04.2014
(73) Patentinhaber: Leifheit AG, 56377 Nassau (DE)
(72) Erfinder: FISCHER, Klaus-Jürgen, 56379 Holzappel (DE); DAUBACH, Harald, 56379 Weinähr (DE); PAPZIEN, Klaus, 56377 Nassau (DE)
(74) Vertreter: Tersteegen, Felix
(86) Internationale Anmeldenummer: PCT/EP2012/060073
(87) Internationale Veröffentlichungsnummer: WO 2012/163929

(56) Entgegenhaltungen:
- JP-A- 59 146 613
- JP-A- 2005 087 537
- RO-B1- 116 338
- SU-A1- 465 178

## Beschreibung

### Technisches Gebiet

Die Erfindung betrifft eine Schälvorrichtung für eine Schale aufweisende Lebensmittel, insbesondere für gekochte Lebensmittel und insbesondere für gekochte Kartoffeln, wobei das Lebensmittel längs einer Schälfläche bewegbar ist und die Schälfläche zumindest ein Schälmittel bildet, das eine von der Schale gebildete äußere Schicht des Lebensmittels infolge eines Anstelldrucks während der Bewegung des Lebensmittels relativ zur Schälfläche zu entfernen vermag, wobei die Schälvorrichtung zumindest eine elastische Schälschicht mit zumindest einem Durchlass aufweist und der Durchlass derart geformt und dimensioniert ist, dass das Lebensmittel durch ihn unter elastischer Verformung eines angrenzenden Reibbereichs der Schälschicht durchführbar ist und wobei der Reibbereich mit seiner Oberseite, die bei Durchführen des Lebensmittels durch den Durchlass entlang der Oberfläche des Lebensmittels reibt, die Schälfläche bildet. Die Oberseite der Schälschicht ist dabei zumindest um den Durchlass herum im Bereich des Reibbereichs mit reibungserhöhenden Mitteln versehen, die von Erhebungen, insbesondere in Form von Noppen, oder von Einprägungen in die Schälschicht gebildet sind.

### Stand der Technik

Aus der JP 59 146613A ist eine Schälvorrichtung für Lebensmittel bekannt, bei der ein elastischer, haubenartiger Topf an seiner Oberseite mit radial nach innen verlaufenden Schlitzen versehen ist, die in einer mittleren Öffnung enden. Durch diese Öffnung kann unter Aufweitung der blendenartigen Oberseite ein Lebensmittel zum Schälen durchgesteckt werden.

Der Nachteil dieser Vorrichtung besteht darin, dass zum einen die Schlitze einen Teilbereich der Seitenwandung des Lebensmittels nicht abdecken und zum anderen das Lebensmittel nur schwer in die Öffnung eingefädelt werden kann.

Aus der SU 465 178 A1 ist eine hobelartige Schneidvorrichtung zum Abschneiden von Schalen bekannt. Diese Vorrichtung hat den Nachteil, dass relativ großer Verschnitt auftritt.

Aus der RO 116 338 B1 ist eine Schälvorrichtung bekannt, die einen Zylinder aufweist, in dem klappbare Reibelemente vorgesehen sind, längs derer das durch den Zylinder fallende Lebensmittel bewegt ist. Diese Vorrichtung hat den Nachteil, dass die Schälwirkung nicht optimal ist.

Die JP 2005 087537 A wiederum offenbart eine Schälvorrichtung mit einer Scheibe, die an der Innenseite eine Öffnung aufweist, deren Innenrand als Klinge ausgebildet ist. Diese Vorrichtung hat den Nachteil, dass die Öffnung nicht an den Durchmesser des Lebensmittels anpassbar ist bzw. sich nicht selbstständig anpasst, so dass es sich nicht für Lebensmittel eignet, deren Durchmesser über die Länge variiert.

Schälvorrichtungen für Lebensmittel dieser Art sind weiterhin aus der DE 86 14 827 U1 bekannt. Diese Schälvorrichtung besteht aus einem Rahmen, auf den eine elastische Folie gespannt ist, die im mittleren Bereich eine kleine Öffnung aufweist. Durch diese Öffnung kann ein zu schälendes Lebensmittel, in diesem Fall eine gekochte Kartoffel, hindurch gesteckt werden, wobei die Ränder der Eröffnung an dem Lebensmittel reiben und so die Schale abreiben sollen. Damit das Lebensmittel durch die vergleichsweise kleine Öffnung hindurch gesteckt werden kann, ist die Folie lamellenförmig gefaltet, so dass sie durch Auffalten der Lamellen aufgeweitet werden kann.

Obwohl diese Schälvorrichtung auf einfache Weise das Schälen einer gekochten Kartoffel ermöglicht, hat jedoch den Nachteil, dass zum einen die Schälfunktion aufgrund der glatten Folie nicht optimal ist und sich zum anderen in den einzelnen Falten der Lamellen Lebensmittelreste sammeln, die aufwändig wieder im Rahmen der Reinigung entfernt werden müssen. Der genannte Nachteil ließe sich zwar durch eine engere Durchgangsöffnung verringern, dies bringt aber wiederum die Gefahr mit sich, dass das weiche Lebensmittel nicht nur geschält sondern zumindest teilweise auch zerquetscht wird.

Aus der DE 196 43 795 A1 ist eine Schälvorrichtung für Kartoffeln bekannt, die trichterförmig ausgebildet ist, wobei der untere Bereich des Trichters radial nach innen verlaufende Schlitze aufweist, so dass sich die Wandung des Trichters aus einzelnen Segmenten zusammensetzt, die durch eine hindurch gesteckte Kartoffel aufgeweitet werden kann, wobei die Innenseiten der Segmente an der Kartoffel reiben und so die Schale abreiben. Diese Ausgestaltung hat den Nachteil, dass sie vergleichsweise viel Raum benötigt, so dass Kunden davor zurückschrecken, sich ein solches, zusätzliches Küchengerät anzuschaffen, da es Lagerraum in der Küche benötigt.

Ein weiterer Nachteil besteht darin, dass die einzelnen Segmente mit ihrer glatten Innenseite an das Lebensmittel angestellt werden, was keine optimale Schälwirkung mit sich bringt. Um dies zu verbessern wird vorgeschlagen, dass die Innenseite dieser Segmente mit reibungserhöhenden Dornen versehen werden, was jedoch dazu führt, dass nicht nur eine Reibungskraft auf die Schalen ausgeübt wird sondern der darunter liegende Bereich des weichen Lebensmittels ebenfalls zerstört werden kann.

Ferner sind Schälmesser allgemein bekannt. Ferner ist es bekannt, Lebensmittel in einem rotierenden Behälter, der an seiner Innenwand Schälmittel aufweist, solange chaotisch zu bewegen, bis die Schale abgerieben ist.

Die bekannten Schälvorrichtungen haben jedoch den Nachteil, dass sie entweder trotz einer Erleichterung der Bedienung einen vergleichsweise großen manuellen Aufwand erfordern oder dass das Schälergebnis nicht befriedigend ist. Ferner ist es oft ein Nachteil, das weiche Lebensmittel, wie zum Beispiel gekochte Kartoffeln oder Tomaten, nicht geschält werden können, ohne das restliche Lebensmittel zu zerdrücken.

### Darstellung der Erfindung

Aufgabe der Erfindung ist es daher, eine kostengünstige Schälvorrichtung zu schaffen, die einfach und effektiv ein Lebensmittel zu schälen vermag.

Diese Aufgabe wird erfindungsgemäß durch eine Schälvorrichtung nach Anspruch 1 gelöst.

Insbesondere wird die Aufgabe durch eine Schälvorrichtung gelöst, die einen unteren, topfartigen Aufnahmeraum aufweist, dessen obere Öffnung von der Schälschicht überspannt ist, wobei oberhalb der Schälschicht ein kanalartiger Lebensmittelhalter vorgesehen ist, über den das Lebensmittel der Schälschicht im Bereich des Durchlasses zuführbar ist, wobei insbesondere ein in dem Lebensmittelhalter geführter Druckstempel zum Andrücken an die Schälschicht vorgesehen sein kann. Der Druckstempel kann so geformt sein, dass er mit einem nach unten hervorspringenden, dünnen Druckelement das Lebensmittel durch den Durchlass hindurch schieben kann, wobei hierzu das Druckelement dünner als der Durchlass ist und eine Länge aufweist, die wenigstens der Hälfte, bevorzugt 2/3 der Länge und weiter bevorzugt der Länge des Lebensmittels entspricht, so dass der in die Schälschicht durch den Durchlass eintauchende Druckstempel das Lebensmittel durch den Durchlass drücken kann.

Die erfindungsgemäße Schälvorrichtung hat den besonderen Vorteil, dass sie ohne Messer oder sonstige Klingen effektiv Lebensmittel zu schälen vermag. Bei diesen Lebensmitteln handelt es sich im Wesentlichen um gekochte Lebensmittel oder besonders weiche Lebensmittel, bei denen die Schale durch Reibkräfte von der Außenseite abgerieben werden kann, die aber vergleichsweise intolerant gegenüber hohen Pressdrücken sind, da ansonsten die Gefahr bestehen würde, dass die Lebensmittel zerdrückt werden. Dies sind zum Beispiel gekochte Kartoffeln oder gekochte Tomaten. Nachfolgend wird die Funktion der Schälvorrichtung anhand einer Schälvorrichtung für Kartoffeln beschrieben, ohne dass die Erfindung in ihrer Anwendung hierauf eingeschränkt sein soll. Vielmehr ist die Erfindung auf alle denkbaren Lebensmittel anwendbar, bei denen eine äußere Schicht entfernt werden soll.

Die erfindungsgemäße Schälvorrichtung weist mit der elastischen Schälschicht und dem Durchlass eine Schicht auf, die die Schalen einer Kartoffel beim Durchschieben durch den Durchlass abreibt. Hierzu ist der Durchlass zum einen so gestaltet, dass sich ein Reibbereich ergibt, der längs der Wandung des Lebensmittels, also zum Beispiel der Kartoffelschale beim Durchstecken durch den Durchlass an der Wandung anliegt und entsprechende Reibkräfte überträgt, so dass die Schale abgerieben und zurückgehalten wird. Dies setzt voraus, dass die Elastizität der Schälschicht hinreichend groß ist und dass der Durchlass hinreichend klein ist, so dass sich der Reibbereich zum einen ergibt und zum anderen elastisch an die Wandung des Lebensmittels anschmiegen kann.

Eine bevorzugte Ausführungsform der Erfindung weist eine Schälschicht auf, die zumindest einen Durchlass aufweist. Je nach Anwendung können auch mehrere Durchbrüche vorgesehen sein, zum Beispiel können mehrere unabhängig voneinander, nebeneinander liegende Durchbrüche für unterschiedliche Größen von Lebensmitteln vorgesehen sein. Die Schälschicht ist dann so ausgebildet, dass die Durchbrüche ihre Funktion erfüllen können. Je nach Material kann einfach eine größere Schälschicht vorgesehen sein, die nebeneinander mehrere Durchbrüche aufweist. Alternativ kann auch ein größerer, fester Tragbereich vorgesehen sein, in den mehrere, zum Beispiel runde elastische Schälschichten dann jeweils in einem Durchlass integriert sind.

Die elastische Schälschicht kann bei einer bevorzugten Ausführungsform der Erfindung als Kunststoff- oder Gummischeibe ausgebildet sein. Im einfachsten Fall kann die Erfindung dann bereits durch diese Scheibe mit dem jeweiligen Durchlass realisiert werden, durch den das Lebensmittel hindurchgedrückt wird. Diese einfachste Ausgestaltung der Erfindung hat den großen Vorteil, dass die Schälvorrichtung scheibenartig ist und im Schrank wenig Platz beansprucht.

Darüber hinaus kann die scheibenartige Vorrichtung auch einfach unter dem Wasserhahn abgespült und gereinigt werden. Der Nachteil besteht darin, dass die Schälvorrichtung mit einer Hand gehalten werden muss, während mit der anderen Hand das Lebensmittel durch den Durchlass hindurchgedrückt wird, oder dass die Schälvorrichtung auf das auf einem Tisch liegende Lebensmittel aufgedrückt wird, so dass dieses dann von unten nach oben durch den Durchlass hindurchgedrückt wird. Diese Handhabung wird aufgrund der anfallenden Schalen und auch in den Fällen, in denen ein heißes Lebensmittel geschält werden soll, mit einigen Problemen verbunden sein.

Eine weitere Ausgestaltung der Erfindung weist daher eine elastische Schälschicht auf, die in einem Rahmen gehalten ist, der wiederum in ein Gehäuse integriert sein kann. Dies ermöglicht zum einen die elastische Schälschicht dünner und elastischer zu halten, da der Rahmen die notwendige Gesamtstabilität bietet. Darüber hinaus kann der Rahmen Teil einer Gesamtvorrichtung sein, die zum Beispiel einen unter dem Rahmen befindlichen Auffangbehälter aufweist, in den das geschälte Lebensmittel hineinfällt. Hier kann der Rahmen also in einem Gehäuse integriert sein, dass auf einen Tisch oder einer sonstigen Unterlage aufstellbar ist, wobei das zu schälende Lebensmittel dann von oben nach unten durch den Durchlass der elastischen Schälschichten durchgedrückt wird.

Die elastische Schälschicht ist ausgebildet, dass sie sich mit einem Randbereich rund um den Durchlass bei Durchführen des Lebensmittels elastisch und trichterartig an die Außenkontur des Lebensmittels anlegt. Die elastische Schälschicht ist dabei so vorgeformt, dass ein Einlauftrichter bereits vorgeformt ist. Je nach Material kann die Schälwirkung durch die Haftreibung der elastischen Schälschicht mit der Wandung des durchgeführten Lebensmittels erzeugt werden.

Zusätzlich wird die Schälwirkung auch durch reibungserhöhende Mittel verbessert, die innerhalb des Reibbereiches angeordnet sind. Dies können beispielsweise Noppen oder sonstige Erhebungen sein, die von der Oberfläche des Reibbereiches nach oben hervorspringen und so zum Beispiel die Schale des Lebensmittels anritzen um eine Initialablösung einer Schalenschicht zu ermöglichen. Oft wird es ausreichend sein, eine elastische Schälschicht mit einem Durchlass vorzusehen, der in der Größe den üblichen Lebensmitteln angepasst ist.

Sofern die Lebensmittel sehr drucksensibel sind oder sehr große Größenvariationen aufweisen, können auch mehrere Durchbrüche vorgesehen sein, die unterschiedliche Größen aufweisen oder die elastische Schälschicht kann austauschbar ausgebildet sein, so dass zunächst die elastische Schälschicht an die Größe des Lebensmittels angepasst wird. Ferner können mehrere elastische Schälschichten untereinander angeordnet sein, so dass mehrere Schälvorgänge hintereinander durchgeführt werden um das Schälergebnis zu verbessern. Diese mehreren, untereinander angeordneten Schälschichten können zum Beispiel in einem gemeinsamen Rahmen gehalten sein, der die elastischen Schälschichten unter Belassung eines Abstandes parallel zueinander fest einspannt.

Die Durchbrüche können lochartig in einem runden oder ovalen Querschnitt ausgebildet sein. Um die Schälwirkung zu erreichen, ist der Durchlass dann etwas kleiner als das Lebensmittel selbst.

Alternativ kann der Durchlass auch von einfachen Spalten gebildet sein, die durchgängig im Material der elastischen Schälschicht vorgesehen sind. Dies können Einzelspalten oder auch im Winkel zueinander angeordnete mehrere Spalten sein, so dass sich das Material der elastischen Schälschicht mit von den Spalten freigegebenen Flügeln beim Durchdrücken des Lebensmittels an die Außenkontur des Lebensmittels anlegt. Auch eine Kombination beider beschriebener Durchlassarten ist möglich. Um den Durchlass herum kann eine Vertiefung in der elastischen Schälschicht vorgesehen sein, in der sich abgeschabtes Material, insbesondere die Schalen und evtl. Flüssigkeiten sammeln können. Diese Vertiefung ist bevorzugt kanalartig als Rinne ausgebildet, die um den Durchlass herum verläuft.

Eine weitere bevorzugte Ausbildung der Erfindung besteht darin, dass keine ebene elastische Schälschicht verwendet wird, sondern dass die elastische Schälschicht die Form eines elastisch aufweitbaren Schlauches aufweist. Hier wird das Lebensmittel durch den Schlauch hindurchgedrückt und während des Durchdrückens geschält. Diese Ausgestaltung entspricht im Wesentlichen dem oben bereits beschriebenen Einlauftrichter, wobei hier der Trichter so tief ist, dass die elastische Schälschicht schlauchartig ausgebildet ist. Es ist auch möglich, ausschließlich einen sich verengenden Schlauch zu verwenden, der keine horizontalen Bereiche aufweist. Auch diese schlauchartige Schälvorrichtung kann auf ihrer Innenseite mit reibungserhöhenden Mitteln versehen sein, um den Schälvorgang zu optimieren.

Eine etwas aufwändigere, aber leicht zu bedienende Vorrichtung weist ein Gehäuse auf, das im mittleren Bereich einen Rahmen besitzt, in dem die elastische Schälschicht gehalten ist. Unterhalb des Rahmens ist im Gehäuse ein Auffangbehälter vorgesehen, in den die geschälten Lebensmittel hineinfallen können. Bevorzugt ist dieser herausnehmbar, um die nacheinander geschälten Lebensmittel dann weiter verarbeiten zu können.

Oberhalb des Rahmens kann das Gehäuse einen Zuführschacht in Form eines kanalartigen Lebensmittelhalters aufweisen, über den die zu schälenden Lebensmittel dem Durchlass zuführbar sind. Dieser Lebensmittelhalter entspricht im Wesentlichen dem Schneidguthalter einer Reibe oder dem Zuführschacht einer Küchenmaschine und ist zum Beispiel in Form einer vertikal oder schräg nach unten verlaufenden Röhre ausgebildet, deren Ende in den Durchlass mündet. Dies hat den Vorteil, dass nacheinander Lebensmittel eingeführt werden können und gegebenenfalls über einen Druckstempel durch den Durchlass hindurchgeführt werden können.

Die Materialien der elastischen Schälschicht und auch der sonstigen Teile sind bevorzugt so gewählt, dass sie temperaturfest sind, um auch heiße Lebensmittel schälen zu können. Darüber hinaus weist die elastische Schälschicht eine Elastizität auf, die es ermöglicht, dass sich die Ränder des Durchlasses mit einem vergleichsweise breiten Reibbereich an das zu schälende Lebensmittel anlegen. Gleichzeitig muss die Spannkraft des Durchlasses und des Reibbereiches so groß sein, dass die Lebensmittelschalen abgerieben werden können.

Bei einer weiteren bevorzugten Ausgestaltung ist die elastische Schälschicht in einem Gehäuse gehalten, zum Beispiel in einem Rahmen, der wiederum im Gehäuse austauschbar gelagert ist. Dies ermöglicht es, den Rahmen beispielsweise zu Reinigungszwecken oder auch zur Größenanpassung des Durchlasses an das Lebensmittel herauszunehmen bzw. zu tauschen. Eine geeignete Führung kann sicherstellen, dass der Rahmen nur in der richtigen Orientierung, in der der Reibbereich oben angeordnet ist, eingesetzt werden kann.

Alternativ kann die elastische Schälschicht aber auch an der Ober- und der Unterseite mit einem Reibbereich versehen sein, so dass der Rahmen gar nicht mehr in einer falschen Orientierung einsetzbar ist, da es keine definierte Oberseite oder Unterseite gibt.

Schließlich kann der Reibbereich an der Oberseite und der Unterseite auch unterschiedlich ausgebildet sein, um durch Drehen der elastischen Schälschicht das Schälverhalten verändern zu können. So können die Noppen an der Unterseite an andere Geometrie und/oder Höhe aufweisen als an der Oberseite. Auch kann die Unterseite bewusst glatt gehalten sein oder nur mit Nuten versehen sein, so dass die Reibwirkung im Vergleich zur mechanischen Schälwirkung in den Vordergrund tritt.

Weitere Merkmale und Vorteile der Erfindung ergeben sich aus den Unteransprüchen und aus der nachfolgenden Beschreibung eines bevorzugten Ausführungsbeispiels anhand der Zeichnung.

### Kurze Beschreibung der Zeichnungen

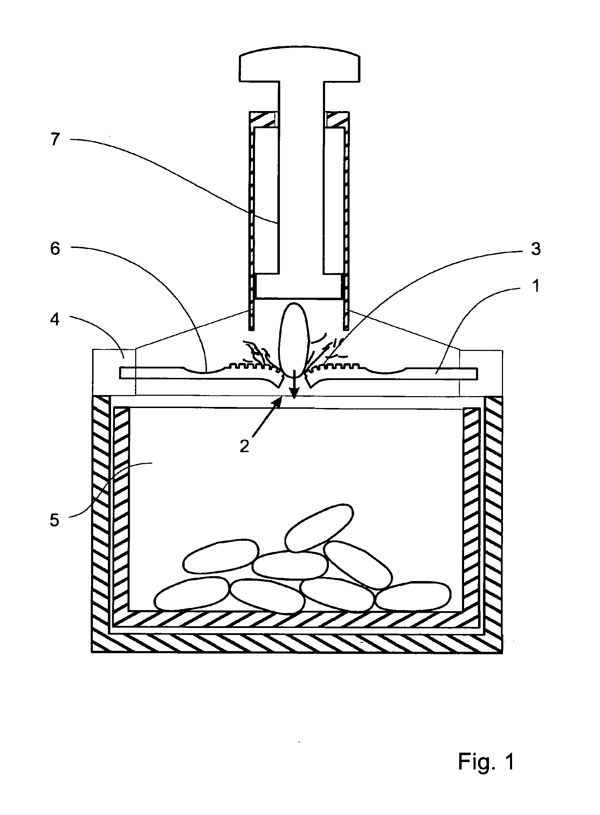

In der Zeichnung zeigt Figur 1 schematisch eine erfindungsgemäße Schälvorrichtung.

### Bester Weg zur Ausführung der Erfindung

Die Schälvorrichtung weist hier ein Gehäuse auf, in dem die wesentlichen Bauelemente gehalten sind. Wesentlicher Funktionsbereich der Schälvorrichtung ist die elastische Schälschicht 1 im mittleren Bereich des Gehäuses. Die elastische Schälschicht 1 weist hier einen Durchlass 2 auf, durch den ein Lebensmittel zum Schälen hindurchgesteckt werden kann. Im Randbereich und um den Durchlass 2 ist ein Reibbereich 3 ausgebildet, der sich während des Durchsteckens des Lebensmittels an die Außenkontur des Lebensmittels anlegt.

Die elastische Schälschicht 1 ist in einem Rahmen 4 des Gehäuses gehalten, der bevorzugt so im Gehäuse integriert ist, dass dieser austauschbar und herausnehmbar ist. Dies ermöglicht zum einen das Erneuern der Funktionsbauteile und zum anderen das Reinigen der elastischen Schälschicht 1, nachdem die Lebensmittel geschält sind. Die abgeschälten Schalen werden sich oberhalb der elastischen Schälschicht 1 und um den Durchlass 2 sammeln, der hierzu eine Vertiefung 6 aufweist, die zur Aufnahme der abgeriebenen Schalen vorgesehen ist. Gleichzeitig sammelt sich hier zum Beispiel ausgepresstes Wasser.

Unterhalb des Rahmens 4 mit der elastischen Schälschicht 1 ist ein Auffangbehälter 5 vorgesehen, in den die geschälten Lebensmittel hineinfallen. Oberhalb des Rahmens 4 ist hier eine Zuführung vorgesehen, die einen Druckstempel 7 aufweist, wobei die Zuführung als zylindrische Röhre ausgebildet ist, die oberhalb des Durchlasses 2 endet. Die über den Druckstempel 7 nach unten gedrückten Lebensmittel werden so in den Durchlass 2 hineingedrückt und durch diesen hindurchgeführt.

Damit der Druckstempel 7 das Lebensmittel nicht zerdrückt ist seine Unterseite bevorzugt elastisch ausgebildet. Hierzu kann zum Beispiel die Unterseite des Druckstempels 7 von einer gespannten Gummi- oder Kunststofffolie gebildet sein, die eine hinreichende Nachgiebigkeit aufweist. Auch ein vollständig aus elastischem Material gefertigter Druckstempel ist möglich.

Die dargestellte Ausführungsform ist nur eine denkbare Variante von vielen Möglichkeiten, die Erfindung umzusetzen. Wesentlicher Kern der Erfindung ist die Tatsache, dass die elastische Schälschicht als elastische Schicht vorgesehen ist, die einen Durchlass 2 mit einem Einlauftrichter aufweist, der sich mit dem Reibbereich 3 an das Lebensmittel anlegt und so beim Hindurchstecken des Lebensmittels die Schale abreibt. Die elastische Schälschicht 1 kann mehrere Durchbrüche 2 aufweisen, es ist auch möglich, dass die elastischen Schälschichten nebeneinander mit mehreren Durchbrüchen im Gerät angeordnet sind, so dass der Benutzer die jeweils geeigneten Durchbrüche 2 wählen kann.

Schließlich kann über die Wahl eines genügend elastischen Materials auch dafür Sorge getragen werden, dass ein Durchlass 2 für eine sehr große Spannweite von Größenvariationen geeignet ist.

Die dargestellte Ausgestaltung der Schälvorrichtung als selbstständiges Gerät ist eine denkbare Variante. Alternativen können zum Beispiel in einem einfachen Rahmen 4 bestehen, der die elastische Schälschicht 1 hält. Eine weitere Alternative ist ein Rahmen 4, der so ausgebildet ist, dass er auf einen handelsüblichen Topf aufsetzbar ist, so dass der Topf den Auffangbehälter 5 bildet. Alternativ kann der Rahmen 4 natürlich auch auf eine küchenübliche Schüssel, zum Beispiel das Unterteil einer Salatschleuder oder einer Rührschüssel aufsetzbar sein.

Die dargestellte Zuführvorrichtung ist nicht zwangsläufig notwendig, sie kann den Komfort erhöhen und optional vorgesehen sein. Die Grundfunktion der Schälvorrichtung wird hierdurch allerdings nicht beeinflusst, da die Lebensmittel auch von Hand durch den Durchlass 2 in der Schälschicht 1 hindurchgedrückt werden können.

### Weg(e) zur Ausführung der Erfindung

Alternativ kann die Schälvorrichtung auch als Schlauch ausgebildet sein, der an seiner Innenseite die reibungserhöhenden Mittel aufweist und zum Beispiel an einem Rahmen oder in einem Gehäuse hängen kann. Es ist aber auch ausreichende, wenn der Schlauch alleine verwendet wird, in dem der Benutzer durch Umgreifen des Schlauches den Innendurchmesser hinter dem Lebensmittel nach und nach verkleinert, so dass dieses durch den Schlauch getrieben wird.

Auch eine Kombination beider Ausgestaltungen ist möglich, wenn die Schälschicht einen schlauchförmigen Mittelbereich aufweist, der sich nach unten herabhängend von dem Durchlass auch in einen Aufnahmebehälter erstreckt, so dass eine längere Passage mit reibungserhöhenden Mitteln an der inneren Mantelfläche vorhanden ist.

### Bezugszeichenliste:

- 1: Schälschicht
- 2: Durchlass
- 3: Reibbereich
- 4: Rahmen
- 5: Auffangbehälter
- 6: Vertiefung zur Aufnahme der abgeriebenen Schalen
- 7: Druckstempel

## Patentansprüche

1. Schälvorrichtung für eine Schale aufweisende Lebensmittel, insbesondere für gekochte Lebensmittel und insbesondere für gekochte Kartoffeln, wobei das Lebensmittel längs einer Schälfläche bewegbar ist und die Schälfläche zumindest ein Schälmittel bildet, das eine von der Schale gebildete äußere Schicht des Lebensmittels infolge eines Anstelldrucks während der Bewegung des Lebensmittels relativ zur Schälfläche zu entfernen vermag, und die Schälvorrichtung zumindest eine elastische Schälschicht (1) mit wenigstens einem Durchlass (2) aufweist, der derart geformt und dimensioniert ist, dass das Lebensmittel durch ihn unter elastischer Verformung eines angrenzenden Reibbereichs (3) der Schälschicht (1) durchführbar ist und wobei der Reibbereich (3) mit seiner Oberseite, die bei Durchführen des Lebensmittels durch den Durchlass (2) entlang der Oberfläche des Lebensmittels reibt, die Schälfläche bildet und die Schälschicht (1) als Folie mit an der Oberseite der Schälschicht (1) zumindest um den Durchlass (2) herum und im Bereich des Reibbereichs angeordneten, reibungserhöhenden Mitteln ausgebildet ist, die von Erhebungen, insbesondere in Form von Noppen, oder von Einprägungen in die Schälschicht (2) gebildet sind, **dadurch gekennzeichnet, dass** der den Durchlass (2) umgebende Randbereich der Schälschicht (1) in Form eines konkav nach unten gerichteten Einlauftrichters ausgebildet ist, dessen innere Wandung den Reibbereich (3) bildet.

2. Schälvorrichtung für Lebensmittel nach Anspruch 1, **dadurch gekennzeichnet, dass** die Schälvorrichtung einen topfförmigen Auffangbehälter (5) mit wenigstens einer oberen Einfüllöffnung und einen Rahmen (4) aufweist, der oberhalb der Einfüllöffnung mit dem Auffangbehälter (5) lösbar oder fest verbunden angeordnet ist und die elastische Schälschicht (1) hält.

3. Schälvorrichtung für Lebensmittel nach dem vorhergehenden Anspruch, **dadurch gekennzeichnet, dass** der Rahmen (4) die Schälschicht (1) vollständig umgibt und die Schälschicht (1) vom Rahmen (4) über den gesamten Umfang gehalten, insbesondere in dem Rahmen eingespannt ist.

4. Schälvorrichtung für Lebensmittel nach einem der vorhergehenden Ansprüche, **dadurch gekennzeichnet, dass** mehrere Schälschichten (1) untereinander angeordnet sind, die untereinander angeordnete Durchbrüche (2) aufweisen, so dass das Lebensmittel durch mehrere Durchbrüche (2) untereinander angeordneter Schälschichten (1) durchführbar ist.

5. Schälvorrichtung für Lebensmittel nach einem der vorhergehenden Ansprüche, **dadurch gekennzeichnet, dass** zumindest ein Durchlass (2) die Form eines in die Schälschicht (1) eingebrachten, runden oder ovalen Loches aufweist.

6. Schälvorrichtung für Lebensmittel nach einem der vorhergehenden Ansprüche, **dadurch gekennzeichnet, dass** der Durchlass (2) in Form zumindest eines, die Schälschicht (1) durchsetzenden Spaltes ausgebildet ist.

7. Schälvorrichtung für Lebensmittel nach dem vorhergehenden Anspruch, **dadurch gekennzeichnet, dass** der Durchlass (2) in Form zweier in einem Winkel, insbesondere in einem rechten Winkel zueinander angeordneter Spalte ausgebildet ist.

8. Schälvorrichtung für Lebensmittel nach einem der vorhergehenden Ansprüche, **dadurch gekennzeichnet, dass** die Schälschicht (1) mehrere Durchbrüche (2) unterschiedlicher Größe und/oder unterschiedlicher Reibwerte aufweist.

9. Schälvorrichtung für Lebensmittel nach einem der vorhergehenden Ansprüche, **dadurch gekennzeichnet, dass** die Schälschicht (1) von einem elastisch aufweitbaren Schlauch gebildet ist oder im Bereich des Durchlasses (2) einen elastisch aufweitbaren Schlauchabschnitt aufweist, dessen Innenraum den Durchlass (2) bildet und dessen innerer Durchmesser geringer ist als die Dicke des Lebensmittels und der mit seiner inneren Mantelfläche den Reibbereich (3) bildet.

10. Schälvorrichtung für Lebensmittel nach einem der vorhergehenden Ansprüche, **dadurch gekennzeichnet, dass** die Unterseite der Schälschicht (1) zumindest um den Durchlass (2) herum im Bereich unterhalb des Reibbereichs reibungserhöhende Mittel aufweist, die insbesondere von Noppen, sonstigen Erhebungen oder Einprägungen in die Schälschicht (2) gebildet sind, wobei die Schälschicht (1) drehbar mit der Unterseite nach oben an der Schälvorrichtung befestigbar ist und die reibungserhöhenden Mittel auf jeder Seite der Schälschicht unterschiedlich ausgebildet sind, insbesondere unterschiedliche Kratz- oder Reibeigenschaften durch unterschiedlich hohe, dichte und/oder kantige oder spitze Mittel aufweisen.

11. Schälvorrichtung für Lebensmittel nach einem der vorhergehenden Ansprüche, **dadurch gekennzeichnet, dass** oberhalb des Durchlasses (2) ein kanalartiger Lebensmittelhalter vorgesehen ist, über den das zu schälende Lebensmittel dem Durchlass (2) zuführbar ist.

12. Schälvorrichtung für Lebensmittel nach dem vorhergehenden Anspruch, **dadurch gekennzeichnet, dass** der kanalartige Lebensmittelhalter mit einem Gehäuse verbunden ist, das den unteren Auffangbehälter (5) aufweist, wobei ein Druckstempel (7) in einer Führung gehalten ist, über den das zu schälende Lebensmittel dem Durchlass (2) zuführbar ist und der an seiner dem Lebensmittel zugewandten Unterseite wenigstens im mittleren Bereich elastisch ausgebildet ist.

13. Schälvorrichtung für Lebensmittel nach einem der vorhergehenden Ansprüche, **dadurch gekennzeichnet, dass** um den Durchlass (2) herum eine Vertiefung (6) zur Aufnahme der abgeriebenen Schalen angeordnet ist.

## Claims

1. A peeling device for food encompassing a peel, in particular for cooked food and in particular for cooked potatoes, wherein the food can be moved along a peeling surface and the peeling surface forms at least one peeling means, which is able to remove an outer layer of the food, which is formed by the peel, due to a contact pressure during the movement of the food relative to the peeling surface, and the peeling device encompasses at least one elastic peeling layer (1) comprising at least one aperture (2), which is formed and dimensioned such that the food can be guided through said aperture under elastic deformation of an adjacent grating area (3) of the peeling layer (1), and wherein, with its upper side, which grates along the surface of the food when the food is guided through the aperture (2), the grating area (3) forms the peeling surface and the peeling layer (1) is embodied as film comprising friction-increasing means, which are arranged at the upper side of the peeling layer (1) at least around the aperture (2) and in the area of the grating area and which are formed by bumps, in particular in the form of burls or of indentations into the peeling layer (2), **characterized in that** the edge area of the peeling layer (1), which surrounds the aperture (2), is embodied in the form of an inlet funnel, which is oriented downward in a concave manner and the inner wall of which forms the grating area (3).

2. The peeling device for food according to claim 1, **characterized in that** the peeling device encompasses a pot-shaped collecting container (5) comprising at least one upper filler opening and a frame (4), which is arranged above the filler opening so as to be releasably or fixedly connected to the collecting container (5) and which holds the elastic peeling layer (1).

3. The peeling device for food according to the preceding claim, **characterized in that** the frame (4) surrounds the peeling layer (1) completely and that the peeling layer (1) is held by the frame (4) across the entire circumference, in particular so as to be clamped into the frame.

4. The peeling device for food according to one of the preceding claims, **characterized in that** a plurality of peeling layers (1) are arranged underneath one another and encompass apertures (2), which are arranged underneath one another, so that the food can be guided through a plurality of apertures (2) of peeling layers (1), which are arranged underneath one another.

5. The peeling device for food according to one of the preceding claims, **characterized in that** at least one aperture (2) encompasses the form of a round or oval hole, which is introduced into the peeling layer (1).

6. The peeling device for food according to one of the preceding claims, **characterized in that** the aperture (2) is embodied in the form of at least one gap, which permeates the peeling layer (1).

7. The peeling device for food according to one of the preceding claims, **characterized in that** the aperture (2) is embodied in the form of two gaps, which are arranged at an angle, in particular at a right angle relative to one another.

8. The peeling device for food according to one of the preceding claims, **characterized in that** the peeling layer (1) encompasses a plurality of apertures (2) having a different size and/or different frictional coefficients.

9. The peeling device for food according to one of the preceding claims, **characterized in that** the peeling layer (1) is formed by an elastically expandable hose or, in the area of the aperture (2), encompasses an elastically expandable hose section, the interior of which forms the aperture (2) and the inner diameter of which is smaller than the thickness of the food and which, with its inner jacket surface, forms the grating area (3).

10. The peeling device for food according to one of the preceding claims, **characterized in that**, at least around the aperture (2) in the area below the grating area, the bottom side of the peeling layer (1) encompasses friction-increasing means, which are formed in particular by burls, other bumps or indentations in the peeling layer (2), wherein the peeling layer (1) can be rotatably fastened to the peeling device with the bottom side facing upward, and the friction-increasing means are embodied differently on each side of the peeling layer, in particular encompass different scratching or grating characteristics due to means of different height, density and/or angularity or pointedness.

11. The peeling device for food according to one of the preceding claims, **characterized in that** provision is made above the aperture (2) for a channel-like food holder, via which the food, which is to be peeled, can be fed to the aperture (2).

12. The peeling device for food according to the preceding claim, **characterized in that** the channel-like food holder is connected to a housing, which encompasses the lower collecting container (5), wherein a plunger (7), via which the food, which is to be peeled, can be fed to the aperture (2), is held in a guide, which, at its bottom side, which faces the food, is embodied elastically in the middle area.

13. The peeling device for food according to one of the preceding claims, **characterized in that** a depression (6) for receiving the peels, which are grated, is arranged around the aperture (2).

## Revendications

1. Éplucheur destiné à des produits alimentaires comportant une pelure et notamment à des pommes de terre cuites, le produit alimentaire étant déplaçable le long d'une surface d'épluchage et la surface d'épluchage formant au moins un moyen d'épluchage qui est susceptible de retirer une couche extérieure formée par la pelure du produit alimentaire, suite à une pression d'application pendant le déplacement du produit alimentaire par rapport à la surface d'épluchage et l'éplucheur comportant au moins une couche d'épluchage (1) élastique avec au moins un passage (2) qui est conformé et dimensionné de telle sorte que le produit alimentaire puisse être passé à travers lui, sous déformation élastique d'une zone de friction (3) adjacente de la couche d'épluchage (1) et avec sa face supérieure, qui lorsque le produit alimentaire passe à travers le passage (2) frotte le long de la surface du produit alimentaire, la zone de friction (3) formant la zone d'épluchage et la couche d'épluchage (1) étant conçue en tant que film avec des moyens augmentant la friction placés sur la face supérieure de la couche d'épluchage (1), au moins autour du passage (2), dans la région de la zone de friction, qui sont formés par des élévations, notamment sous la forme de picots ou de gaufrages dans la couche d'épluchage (2), **caractérisé en ce que** la zone marginale de la couche d'épluchage (1) entourant le passage (2) est conçue sous la forme d'un entonnoir d'entrée orienté vers le bas dont la paroi intérieure forme la zone de friction (3).

2. Éplucheur destiné à des produits alimentaires selon la revendication 1, **caractérisé en ce que** l'éplucheur comporte un récipient collecteur (5) en forme de pot avec au moins une ouverture de remplissage supérieure et un cadre (4), qui au-dessus de l'ouverture de remplissage est placé en étant relié de manière amovible ou fixe avec le récipient collecteur (5) et qui tient la couche d'épluchage (1) élastique.

3. Éplucheur destiné à des produits alimentaires selon la revendication précédente, **caractérisé en ce que** le cadre (4) entoure totalement la couche d'épluchage (1) et la couche d'épluchage (1) est maintenue sur tout le pourtour, notamment est enserrée dans le cadre (4).

4. Éplucheur destiné à des produits alimentaires selon l'une quelconque des revendications précédentes, **caractérisé en ce que** sont placées les unes au-dessus des autres plusieurs couches d'épluchage (1) qui comportent des ajours (2) placés les uns au-dessus des autres, de sorte qu'on puisse faire passer le produit alimentaire à travers plusieurs ajours (2) de couches d'épluchage (1) placées les unes au-dessus des autres.

5. Éplucheur destiné à des produits alimentaires selon l'une quelconque des revendications précédentes, **caractérisé en ce qu'**au moins un passage (2) présente la forme d'un trou rond ou ovale, ménagé dans la couche d'épluchage (1).

6. Éplucheur destiné à des produits alimentaires selon l'une quelconque des revendications précédentes, **caractérisé en ce que** le passage (2) est conçu en forme d'au moins une fente traversant la couche d'épluchage (1).

7. Éplucheur destiné à des produits alimentaires selon la revendication précédente, **caractérisé en ce que** le passage (2) est conçu sous la forme de deux fentes placées sous un angle, notamment sous un angle droit l'une par rapport à l'autre.

8. Éplucheur destiné à des produits alimentaires selon l'une quelconque des revendications précédentes, **caractérisé en ce que** la couche d'épluchage (1) comporte plusieurs ajours (2) de différentes tailles et/ou de différents coefficients de friction.

9. Éplucheur destiné à des produits alimentaires selon l'une quelconque des revendications précédentes, **caractérisé en ce que** la couche d'épluchage (1) est formée par un flexible élastiquement dilatable ou comporte dans la zone du passage (2) un tronçon de flexible élastiquement dilatable dont l'intérieur forme le passage (2) et dont le diamètre intérieur est inférieur à l'épaisseur du produit alimentaire et qui par sa surface d'enveloppe intérieure forme la zone de friction (3).

10. Éplucheur destiné à des produits alimentaires selon l'une quelconque des revendications précédentes, **caractérisé en ce qu'**au moins autour du passage (2), dans la région en-dessous de la zone de friction, la face inférieure de la couche d'épluchage (1) comporte des moyens augmentant la friction qui sont formés notamment par des picots, d'autres élévations ou des gaufrages dans la couche d'épluchage (2), la couche d'épluchage (1) pouvant se fixer sur l'éplucheur de manière rotative, avec la face inférieure dirigée vers le haut et les moyens augmentant la friction étant conçus différemment sur chaque face, présentant notamment différentes propriétés de grattage ou de friction, grâce à des moyens de différente hauteur, de différente densité et/ou des moyens à arêtes vives ou pointus.

11. Éplucheur destiné à des produits alimentaires selon l'une quelconque des revendications précédentes, **caractérisé en ce qu'**au-dessus du passage (2), il est prévu un support de produits alimentaires de type canal, par l'intermédiaire duquel le produit alimentaire à éplucher peut être amené vers le passage (2).

12. Éplucheur destiné à des produits alimentaires selon la revendication précédente, **caractérisé en ce que** le support de produits alimentaire de type canal est relié à un boîtier qui comporte le récipient collecteur (5) inférieur, un piston-chasse (7) par l'intermédiaire duquel le produit alimentaire peut être amené vers le passage (2) et qui sur sa face inférieure dirigée vers le produit alimentaire est conçu en étant élastique au moins dans la zone centrale étant maintenu dans le guidage.

13. Éplucheur destiné à des produits alimentaires selon l'une quelconque des revendications précédentes, **caractérisé en ce qu'**autour du passage (2) est placé un creux (6) destiné à recueillir les épluchures retirées par abrasion.
